# EUROPÄISCHE PATENTSCHRIFT

(11) **EP 0 613 417 B1**
(45) Veröffentlichungstag und Bekanntmachung des Hinweises auf die Patenterteilung: **13.01.1999**
(21) Anmeldenummer: 93915969.5
(22) Anmeldetag: 21.07.1993
(51) Int. Cl.: B32B 5/22, B32B 31/00

(54) **HERSTELLUNG EINER MEHRSCHICHTIGEN VERKLEIDUNG**
MANUFACTURE OF A MULTILAYERED COVERING
FABRICATION D'UN REVETEMENT A COUCHES MULTIPLES

(30) Priorität: 25.07.1992 DE 4224667
(43) Veröffentlichungstag der Anmeldung: 07.09.1994
(73) Patentinhaber: Pelzer, Helmut, 58313 Herdecke (DE)
(72) Erfinder: Pelzer, Helmut, 58313 Herdecke (DE)
(74) Vertreter: Jönsson, Hans-Peter, Dr.Dipl.-Chem.
(86) Internationale Anmeldenummer: EP9301931
(87) Internationale Veröffentlichungsnummer: WO9402312

(56) Entgegenhaltungen:
- EP-A- 0 393 476
- WO-A-88/01935
- DE-A- 3 335 669
- GB-A- 984 857
- GB-A- 1 495 980
- GB-A- 1 561 820
- GB-A- 2 022 510
- US-A- 4 824 506

## Beschreibung

Die Erfindung betrifft ein Verfahren zur Herstellung einer mehrschichtigen Wandverkleidung für Kraftfahrzeuge, insbesondere Personenfahrzeuge, im Wesentlichen bestehend aus einem Dekorteil, einer Zwischenschicht und einem Trägerteil, bei dem die Schichten in der Wärme miteinander verbunden sind.

Derartige Wandverkleidungen sind bekannt. Zu ihrer Herstellung wird zunächst das Dekorteil und das Trägerteil in getrennten Arbeitsgängen hergestellt, anschließend werden die beiden Teile miteinander verbunden. Derartige Verfahren, insbesondere die Verbindung der Dekorschicht mit ihrem Träger, sind sehr zeitaufwendig und teuer.

In der GB 2 022 510 A wird ein Verfahren zum Herstellen einer mehrlagigen Wandverkleidung für Kraftfahrzeuge beschrieben, welche aus einem Dekorteil und einem Trägerteil besteht und bei denen die einzelnen Schichten im wesentlichen in der Wärme verbunden sind.

Die DE 33 35 669 A1 betrifft ein hinterspritzbares bahnenförmiges Kunststoffverbundmaterial und ein Verfahren zu seiner Herstellung und dessen Verwendung.

In der EP 0 476 538 A1 wird eine Fasermatte und ein Verfahren zur Herstellung von Formteilen daraus beschrieben. Durch den Verzicht auf jedwede fremde Bindersysteme ist eine arbeitsplatzfreundliche Produktion ohne Abfall bei hoher Automatisation niedrigen und energetischen Kosten und besonders schnellen Zykluszeiten gegeben.

In der US-A-1,561,820 wird ein Verfahren zur Herstellung von Platten, Panelen oder Formkörpern zur Verkleidungs- oder Dekorationszwecken beschrieben.

Der Erfindung liegt die Aufgabe zugrunde, ein Herstellungsverfahren bereitzustellen, mit dem derartige mehrschichtige Wandverkleidungen in einem Arbeitsgang herstellbar, insbesondere auch dann herstellbar sind, wenn die einzelnen die Schichten bildenden Werkstoffe unterschiedliche Temperaturbeständigkeit aufweisen. Die Aufgabe wird bei einem eingangs beschriebenen Verfahren dadurch gelöst, daß die zur Bildung einer Wandverkleidung bestimmten Schichten nämlich
a) ein mit einem Duroplasten durchmischtes Vlies als Trägerteil (5),
b) gegebenenfalls eine Folie als Klebeschicht,
c) eine als Thermoblocker wirkende Schicht (3),
d) eine PE-Folie oder ein PE-Kleber als Klebeschicht und
e) eine Dekorschicht (1)
der vorgesehenen Reihenfolge nach in eine beheizte Form eingelegt und bei einer Behandlungsdauer von 10 bis 250 sec das Trägerteil (5) mit einer Temperatur von 170 °C bis 240 °C und das Dekorteil (1) mit einer Temperatur von 60 °C bis 120 °C beaufschlagt werden.

Die als Thermoblocker wirkende Zwischenschicht kann aus unterschiedlichem Material bestehen. Er kann beispiels ein Baumwollfaservlies, bevorzugt ein Nadelvlies, insbesondere ein aus wiederverwerteten, zerkleinerten Baumwolltextilien (Reißbaumwolle) hergestelltes Baumwollfaservlies sein, dem
bei der Herstellung
ein duroplastisch aushärtender Binder (Phenolharz) in gleichmäßiger Korngröße oder in Pulverform beigemischt werden kann.

Weiter können als Thermoblocker geschlossenporige Schaumstoffe, etwa ein Polyethylen-, ein PU- oder ein PP-Schaumstoff, insbesondere aber auch offenporige Recycling-Schaumflocken verwendet werden, wobei diese auch ohne vorherige Verbindung, bspw. durch ein Bindemittel, vor dem Einlegen in die Form ein- oder vorzugsweise beidseitig durch eine geschlossene, durch eine Textilbahn oder insbesondere eine Folie gebildete Schicht abgedeckt werden.

Besonders dann, wenn die Dekorschicht aus einer Ware mit empfindlicher Oberfläche besteht, kann besonders vorteilhaft nach dem Schließen der Form zwischen der oder den wärmeempfindlichen Schicht(en) und der benachbarten Forminnenwand ein trennendes Luftpolster erzeugt werden. Wird dabei beim Einlegen der einzelnen Schichten der Wandverkleidung zwischen den wärmebeständigen Schichten bzw. dem Thermoblocker und der wärmeempfindlichen Schicht eine luftundurchlässige Einlage, vorzugsweise in Form einer dünnen Folie, vorgesehen, so kann die zum Aufbau des Luftpolsters dienende Druckluft gleichzeitig auch die zum Verbinden der einzelnen Schichten erforderliche Kraft liefern. Dies kann beispielsweise unter entsprechenden Druck- und Temperaturbedingungen geschehen. Erfindungsgemäß wird der Druck für eine Zeit von 10 sec bis 250 sec, insbesondere 25 bis 180 sec auf einen Wert zwischen 5 und 30 bar, vorzugsweise 10 und 20 bar eingestellt werden.

Es besteht auch die Möglichkeit, dadurch eine Thermoblockerschicht zu bilden, daß das wärmeempfindliche Dekormaterial vor dem Einlegen in die Form mit einem geschlossenporigen PP- oder PUR-Schaum als Thermoblocker hinterschäumt oder flammkaschiert wird.

Zum Aufheizen und Verbinden der temperaturbeständigen Schichten hat sich die Verwendung von hochgespanntem Heißdampf mit einer Temperatur > 200 °C, insbesondere zwischen ca. 220 °C und 300 °C, als hervorragend geeignet erwiesen. Bevorzugt kann dabei vorgesehen werden, daß die Werkzeugform ebenfalls beheizt wird, wobei die Temperatur des Formenteils, beispielsweise des Deckelteils, der die temperaturempfindliche(n) Schicht(en) aufnimmt, bei 60 °C bis 120 °C, vorzugsweise bei ca. 70 °C bis ca. 100 °C, liegen kann, während der die temperaturbeständigen Schichten aufnehmende Formenboden auf eine Temperatur von ca. 170 °C bis 240 °C, bevorzugt ca. 180 °C bis 220 °C, gebracht wird.

Eine besonders vorteilhafte Möglichkeit zum Erzielen einer stabilen Verbindung der die Wandverkleidung aufbauenden Schichten ergibt sich bei Verwendung von eine thermoplastische Phase durchlaufenden Bindern. So kann beispielsweise in einer vorzugsweise im wesentlichen ebenen Vorform unter Erhitzung bis zur thermoplastischen Phase ein Prepreg erzeugt werden, das dann zu unterschiedlichen Formen dadurch weiterverarbeitet werden kann, daß das Prepreg unmittelbar anschließend oder aus einem Vorrat in einer zweiten Form unter Erhitzung des Binders bis zur Vernetzungstemperatur gebracht und - vorzugsweise in der Form - auch mit den erforderlichen Umbugen versehen und/oder beschnitten werden kann. Auf diese Weise ist es beispielsweise möglich, Verkleidungsteile mit einer festen rückseitigen Trägerschicht in einem Arbeitsgang herzustellen.

Durch eine Weiterbildung des erfindungsgemäßen Verfahrens ist es möglich, auch solche Verkleidungsteile, die aus einem die Sichtseite bildenden Dekorteil und einem zwei- oder mehrschichtigen Absorberteil bestehen, in einem Arbeitsgang zu fertigen. Dies geschieht dadurch, daß als Thermoblocker ein Material verwendet wird, das geeignet ist, die temperaturempfindliche(n) Schicht(en) mindestens so lange abzuschirmen, bis die in an sich bekannter Weise vorgenommene Verbindung der das Absorberteil aufbauenden Schichten erfolgt ist.

Die Sperrschicht kann beispielsweise ein Schaum sein, der für eine etwa durch Versuch zu ermittelnde Zeitspanne, in der die Schaumschicht bis zum Schmelzen erhitzt ist, als Isolation wirksam bleibt. Der Ablauf wird durch geeignete Wahl der Verfahrensparameter so gesteuert, daß die Verbindung zwischen den temperaturbeständigen Schichten hergestellt ist, wenn der Schaum Schmelztemperatur erreicht hat oder - in einer Weiterbildung - zu einer nach Abkühlung beispielsweise als Trägerschicht wirksamen Schicht geschmolzen ist. Dann wird der Vorgang unterbrochen und der Formling bevorzugt der Form entnommen, ehe die temperaturempfindliche Schicht eine zu hohe Temperatur erreicht. Der Formling kann anschließend zur Abkühlung in eine Kühlform eingelegt werden. Wird die empfindliche Schicht gekühlt, so kann er auch in der Form belassen werden.

Mit Hilfe einiger Beispiele und einer Zeichnung wird das erfindungsgemäße Verfahren erläutet.

### BEISPIEL 1

Bei einer zweiteiligen Form wurde das Formenoberteil auf eine Temperatur von 90 °C und das Formenunterteil auf eine Temperatur von 210 °C gebracht und während des Formvorganges auf dieser gehalten. In das Formenunterteil wurden nacheinander eingelegt:
1. ein mit einem duroplastisch reagierenden Harz (Phenolharz) getränktes Baumwollfaservlies, Flächengewicht 1.200 g/m²;
2. als Thermoblocker ein vernadeltes Reißbaumwollevlies, Gewicht 500 g/m²;
3. als hitzeempfindliche Dekorschicht ein PES-Material, als Velours vernadelt, Flächengewicht 410 g/m². Gegen den Thermoblocker hin war die Dekorschicht durch eine PE-Folie abgedeckt, die als Sperrschicht und Binder dient.

Die Form wurde zugefahren und die Füllung mittels eines für ca. 120 s aufrechterhaltenen Preßdruckes von insgesamt 12 x 10⁵ N zu einem dreidimensionalen Formteil verformt. Nach Abkühlung wurde das Formteil entnommen und durch Stanzen in seine endgültige Form gebracht.

### BEISPIEL 2

In eine Form gemäß Beispiel 1, Temperatur des Formenoberteils 75 °C, Temperatur des Formenunterteils 230 °C, wurden von unten nach oben eingelegt:
1. Ein mit einem duroplastischen EP-PES-Harzgemisch durchmischtes Baumwollfaservlies als Prepreg-Zuschnitt, Flächengewicht 1.000 g/m²;
2. ein PE-Folienzuschnitt, Dicke 50 µm, als Klebschicht,
3. ein PUR-Schaumzuschnitt von 4 mm Dicke mit aufgesintertem PE-Kleber, Raumgewicht 85 kg/m³;
4. als Dekorschicht ein PES-Velours mit Fasereinbindung, Flächengewicht ca. 350 g/m².

Die Form wurde zugefahren und die Füllung mittels eines für ca. 90 s aufrechterhaltenen Preßdruckes von insgesamt 14 x 10⁵ N zu einem dreidimensionalen Formteil verformt und gleichzeitig gestanzt.

### BEISPIEL 3

Benutzt wurde eine Form ähnlich Beispiel 1, jedoch mit Luftzufuhrbohrungen im Boden und im Deckel. Die Temperatur des Formenoberteils betrug 70 °C, die Temperatur des Formenunterteils 225 °C. Von unten nach oben wurden eingelegt:
1. ein Baumwollfaservlies mit duroplastischem Phenolharzbinder als Prepreg-Zuschnitt, Flächengewicht 1.200 g/m²;
2. ein PE-Sperrfolienzuschnitt, Dicke 50 µm;
3. ein PUR-Schnittschaumzuschnitt, Dicke 12 mm, Raumgewicht 125 kg/m³ mit einer PE-Beschichtung von 95 g/m²;
4. ein PP-Velours mit Faserbeimischung als Dekorschicht, Flächengewicht 350 g/m².

Das Werkzeug wurde zugefahren und die Einlage für 90 s mit von oben in die Form eingeleiteter Luft von 30 °C und einem Druck von 6 bar belastet. Zwischen der Dekorschicht und dem Formenoberteil bildete sich ein luftgefüllter Zwischenraum. Der Luftdruck wirkte durch die Dekorschicht hindurch auf die Sperrschicht, wodurch der nötige Preßdruck auf die unteren Schichten aufgebracht wurde.

Nach Druckentlastung wurde das Formteil entnommen und gestanzt.

Die beigegebene Zeichnung dient der weiteren Verdeutlichung des Verfahrensablaufs:

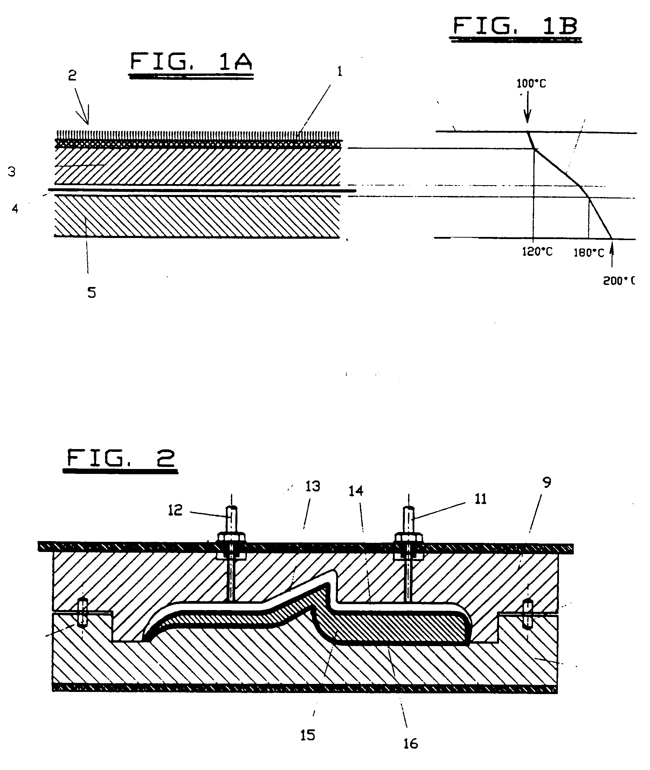

Aus den Figuren 1A und 1B ergibt sich das Wirkprinzip des Thermoblockers, wobei die Fig. 1A schematisch den Schichtaufbau eines erfindungsgemäßen Formteils, die Fig. 1B den Temperaturverlauf in dem Formteil zeigt.

Das Formteil besteht aus einer unteren Schicht 5 aus einem duroplastisch gebundenen Vlies, einem durch eine als Binder dienende Folie 4 von der Unterschicht getrennten Thermoblocker 3 und einer Dekorschicht 1 aus einem Velours mit der empfindlichen Oberfläche 2. Wie in dem Diagramm 1B gezeigt, erfolgt der wesentliche Temperaturabbau in dem Thermoblocker 3.

Die Fig. 2 gibt ein weiteres Beispiel wieder, bei dem die Dekorschicht 14 wie im Beispiel 3 durch ein über die Zuführungen 11, 12 aufgebautes Luftpolster 13 von der Innenwand des Formenoberteils 9 getrennt ist. Die Rückschicht 16, beispielsweise ein duroplastisch gebundenes, zu einer versteiften Tragschicht zusammengepreßtes Vlies, ist durch eine nicht dargestellte Sperrfolie von dem Thermoblocker 15 getrennt.

## Patentansprüche

1. Verfahren zur Herstellung einer mehrlagigen Wandverkleidung für Kraftfahrzeuge, insbesondere Personenkraftfahrzeuge, im wesentlichen bestehend aus einem Dekorteil, einer Zwischenschicht und einem Trägerteil, bei dem die Schichten in der Wärme miteinander verbunden werden, dadurch gekennzeichnet, daß die zur Bildung der Wandverkleidung bestimmten Schichten nämlich
a) ein mit einem Duroplasten durchmischtes Vlies als Trägerteil (5),
b) gegebenenfalls eine Folie als Klebeschicht,
c) eine als Thermoblocker wirkende Schicht (3),
d) eine PE-Folie oder ein PE-Kleber als Klebeschicht und
e) eine Dekorschicht (1)
der vorgesehenen Reihenfolge nach in eine beheizte Form eingelegt und bei einer Behandlungsdauer von 10 bis 250 sec das Trägerteil (5) mit einer Temperatur von 170 °C bis 240 °C und das Dekorteil (1) mit einer Temperatur von 60 °C bis 120 °C beaufschlagt werden.

2. Verfahren nach Anspruch 1, dadurch gekennzeichnet, daß die Dekorschicht (1) mit einer Temperatur von 75°C bis 100°C und das Trägerteil (5) mit einer Temperatur von 180°C bis 220°C beaufschlagt werden.

3. Verfahren nach Anspruch 1 oder 2, dadurch gekennzeichnet, daß als Thermoblocker (3) ein Baumwollfaservlies eingesetzt wird.

4. Verfahren nach Anspruch 3, dadurch gekennzeichnet, daß dem Baumwollfaservlies bei seiner Herstellung ein thermoplastischer oder insbesondere ein duroplastisch aushärtender Binder, insbesondere Phenolharz, in gleichmäßiger Korngröße oder in Pulverform beigemischt wird.

5. Verfahren nach Anspruch 1 oder 2, dadurch gekennzeichnet, daß als Thermoblocker (3) ein geschlossen-poriger Schaumstoff, insbesondere ein Polyethylen-, ein PU- oder ein PP-Schaumstoff, verwendet wird.

6. Verfahren nach Anspruch 5, dadurch gekennzeichnet, daß als Schaumstoff offenporige Recycling-Schaumflocken verwendet werden, die vor dem Einlegen in die Form ein- oder vorzugsweise beidseitig durch eine geschlossene, durch eine Textilbahn oder insbesondere eine Folie gebildete Schicht abgedeckt werden.

7. Verfahren nach einem der Ansprüche 1 bis 6, dadurch gekennzeichnet, daß das wärmeempfindliche Dekormaterial vor dem Einlegen in die Form mit einem geschlossen-porigen PP-Schaum als Thermoblocker hinterlegt, beispielsweise flammkaschiert wird.

8. Verfahren nach einem der Ansprüche 1 bis 7, dadurch gekennzeichnet, daß beim Einlegen der einzelnen Schichten der Wandverkleidung zwischen den wärmebeständigen Schichten bzw. dem Thermoblocker und der wärmeempfindlichen Schicht eine luftundurchlässige Schicht eingelegt wird.

9. Verfahren nach Anspruch 8, dadurch gekennzeichnet, daß als luftundurchlässige Schicht eine dünne Folie eingelegt wird.

10. Verfahren nach einem der Ansprüche 1 bis 9, dadurch gekennzeichnet, daß nach dem Schließen der Form zwischen der oder den wärmeempfindlichen Schichten und der benachbarten Forminnenwand ein trennendes Luftpolster erzeugt wird.

11. Verfahren nach einem der Ansprüche 8 bis 10 in Verbindung mit einem der Ansprüche 1 bis 7, dadurch gekennzeichnet, daß die Verbindung der einzelnen die Wandverkleidung aufbauenden Schichten durch die Wirkung des in dem Luftpolster über der wärmeempfindlichen Schicht (Dekorschicht) herrschenden Druckes erfolgt, wobei der Druck für eine Zeit von ca. 10 sec bis ca. 250 sec auf einen Wert zwischen ca. 5 und 30 bar eingestellt wird.

12. Verfahren nach Anspruch 11, dadurch gekennzeichnet, daß der Druck für eine Zeit von ca. 25 bis 180 sec aufrechterhalten wird.

13. Verfahren nach Anspruch 11 oder 12, dadurch gekennzeichnet, daß der Druck auf einen Wert zwischen ca. 10 und 20 bar eingestellt wird.

14. Verfahren nach einem der Ansprüche 1 bis 13, dadurch gekennzeichnet, daß zum Aufheizen und Verbinden der temperaturbeständigen Schichten diese bei einem Druck >10 bar mit hochgespanntem Heißdampf, >200°C, insbesondere mit 220 bis 300°C beaufschlagt werden.

15. Verfahren nach einem der Ansprüche 1 bis 14, insbesondere einem der Ansprüche 1 bis 13 in Verbindung mit Anspruch 14, dadurch gekennzeichnet, daß zum Erzielen einer stabilen Verbindung aus den die Wandverkleidung aufbauenden Schichten unter Verwendung von eine thermoplastische Phase durchlaufenden Bindern in einer beispielsweise im wesentlichen ebenen Vorform unter Erhitzung bis zur thermoplastischen Phase ein Prepreg erzeugt, daß das Prepreg der Form entnommen und in einer insbesondere gekühlten zweiten Form unter Erhitzung des Binders bis zur Vernetzungstemperatur gebracht und mit den erforderlichen Umbugen versehen und/oder beschnitten wird.

16. Verfahren nach Anspruch 15, dadurch gekennzeichnet, daß das Herstellen der Umbuge vor dem Ausformen erfolgt.

## Claims

1. A process for the preparation of a multi-layered wall lining for motor vehicles, especially passenger cars, essentially consisting of a decorative part, an intermediate part and a support part wherein the layers are thermally bonded to one another, characterized in that the layers designated for producing said wall lining, namely
a) a non-woven fabric blended with a thermosetting plastic material as the support part (5);
b) optionally a plastic sheet as an adhesive layer;
c) a layer (3) serving as a thermoblocker;
d) a PE sheet or a PE adhesive as an adhesive layer; and
e) a decorative layer (1);
are inserted in the designated order in a heated mold, and a temperature of 170°C to 240°C is applied to said support part (5), and a temperature of 60 °C to 120°C is applied to said decorative part (1), the treatment time being from 10 to 250 s.

2. The process according to claim 1, characterized in that a temperature of 75 °C to 100°C is applied to said decorative layer (1), and a temperature of 180°C to 220°C is applied to said support part (5).

3. The process according to claim 1 or 2, characterized in that a cotton fiber non-woven fabric is used as said thermoblocker (3).

4. The process according to claim 3, characterized in that said cotton fiber non-woven fabric, when prepared, is blended with a thermoplastic or, in particular, thermosetting binder, especially phenolic resin, with a uniform grain size or in powder form.

5. The process according to claim 1 or 2, characterized in that a closed-cell foam material, especially a polyethylene, PU or PP foam, is used as said thermoblocker (3).

6. The process according to claim 5, characterized in that open-cell recycling foam off-cuts are used as said foam material which, prior to being inserted in the mold, are covered on one or preferably on both sides thereof with a closed layer formed by a textile web or especially a plastic sheet.

7. The process according to any of claims 1 to 6, characterized in that the decorative material, being heat-sensitive, is backed, for example, flame-bonded, with a closed-cell PP foam as a thermoblocker prior to being inserted in the mold.

8. The process according to any of claims 1 to 7, characterized in that an air-impermeable layer is inserted between the heat-resistant layers and between the thermoblocker and the heat-sensitive layer when the individual layers of the wall lining are inserted in the mold.

9. The process according to claim 8, characterized in that a thin plastic sheet is inserted as said air-impermeable layer.

10. The process according to any of claims 1 to 9, characterized in that a release-providing air cushion is produced between the heat-sensitive layer or layers and the adjacent interior wall of the mold after the mold has been closed.

11. The process according to any of claims 8 to 10 in connection with any of claims 1 to 7, characterized in that the bonding of the individual layers constituting the wall lining is effected by the action of the pressure prevailing in the air cushion over the heat-sensitive layer (decorative layer), said pressure being adjusted to a value of between about 5 and 30 bar for a period of time of from about 10 s to about 250 s.

12. The process according to claim 11, characterized in that said pressure is maintained for a period of time of about from 25 s to 180 s.

13. The process according to claim 11 or 12, characterized in that said pressure is adjusted to a value of between about 10 and 20 bar.

14. The process according to any of claims 1 to 13, characterized in that the heating and bonding of said temperature-resistant layers is effected by applying a pressure of > 10 bar thereto using high-pressure hot steam of 200°C, especially of from 220 to 300°C.

15. The process according to any of claims 1 to 14, especially any of claims 1 to 13 in connection with claim 14, characterized in that a prepreg is produced for achieving a stable bonding between the layers constituting the wall lining, using binders which undergo transition to a thermoplastic phase, in a premold which, for instance, may be essentially plane, with heating to reach the thermoplastic phase, said prepreg is removed from the mold and taken to cross-linking temperature by heating the binder in a second mold, which may be cooled, in particular, and the molded part is provided with the required folds and/or trimmed.

16. The process according to claim 15, characterized in that the preparation of said folds is performed prior to demolding.

## Revendications

1. Procédé de fabrication d'une garniture de paroi multicouches pour vehicules automobiles, notamment pour des voitures de tourisme, constituée essentiellement d'une partie décorative, d'une couche intermédiaire et d'une partie de support, les couches étant reliées les unes aux autres en présence de chaleur, caractérisé en ce que les couches destinées à former la garniture de paroi, à savoir
a) un non tissé mélangé à une résine thermodurcissable en guise de partie de support (5),
b,) le cas échéant, une feuille en tant que couche adhésive.
c) une couche (3) agissant en tant que barrière thermique,
d) une couche de polyéthylène ou un adhésif de polyéthylène en tant que couche adhésive, et
e) une couche décorative (1),
sont déposées selon l'ordre prévu dans un moule chauffé et l'on soumet, pendant une durée de traitement de 10 à 250 s, la partie de support (5) à une température de 170 °C à 240 °C, et la partie décorative (1) à une température de 60 °C à 120 °C.

2. Procédé selon la revendication 1, caractérisé en ce que la couche décorative (1) est soumise à une température de 75 °C à 100 °C, et la partie de support (5) à une température de 180 °C à 220 °C.

3. Procédé selon la revendication 1 ou 2, caractérisé en ce qu'en guise barrière thermique (3) on met en oeuvre un non-tissé de fibres de coton.

4. Procédé selon la revendication 3, caractérisé en ce que lors de sa fabrication, on mélange au non-tissé de fibres de coton, selon une grosseur de grain uniforme ou sous forme de poudre, un liant thermoplastique on notamment un liant du type résine thermodurcissable, notamment une résine phénolique.

5. Procédé selon la revendication 1 ou 2, caractérise en ce qu'en guise de barrière thermique (3) on utilise une mousse à cellules fermées, notamment une mousse de polyéthylène, de polyuréthanne ou de polypropylène.

6. Procédé selon la revendication 5, caractérisé en ce qu'en guise de mousse: on utilise des flocons de mousse de recyclage à cellules ouvertes, qui avant d'être déposés dans le moule, sont recouverts d'un côte ou de préférence des deux côtés; par une couche fermée formée par une nappe de textile ou notamment une feuille.

7. Procédé selon l'une des revendications 1 à 6, caractérisé en ce que le matériau décoratif sensible à la chaleur, avant d'être déposé dans le moule, est' revêtu sur l'envers, par exemple doublé à la flamme, par une mousse de polypropylène à cellules fermées, en guise de barrière thermique.

8. Procédé selon l'une des revendications 1 à 7, caractérisé en ce que lors de la mise en place des différentes couches de la garniture de paroi, on dépose entre les couches résistant à la chaleur et entre la barrière thermique et la couche sensible à la chaleur, une couche imperméable à l'air.

9. Procédé selon la revendication 8, caractérisé en ce qu'en guise de couche imperméable à l'air, on met en place une feuille mince.

10. Procédé selon l'une des revendications 1 à 9, caractérisé en ce qu'après la fermeture du moule, on engendre un coussin d'air de séparation entre la couche ou les couches sensibles à la chaleur et la paroi intérieure de moule voisine.

11. Procédé selon l'une des revendications 8 à 10, en combinaison avec l'une des revendications 1 à 7, caractérisé en ce que la liaison des différentes couches individuelles constituant la garniture de paroi s'effectue par l'action de la pression régnant dans le coussin d'air au-dessus de la couche sensible à la chaleur (couche décorative), la pression étant réglée pour une durée d'environ 10 s à environ 250 s à une valeur entre environ 5 et 30 bars.

12. Procédé selon la revendication 11, caractérisé en ce que la pression est maintenue pour une durée d'environ 25 à 180 s.

13. Procédé selon la revendication 11 ou 12, caractérisé en ce que la pression est réglée à une valeur comprise entre environ 10 et 20 bars.

14. Procédé selon l'une des revendications 1 à 13, caractérisé en ce que pour chauffer et lier les couches résistant a la chaleur, celles-ci sont soumises, sous une pression > 10 bars, à l'action de vapeur surchauffée haute pression, > 200 °C, notamment à 220 à 300 °C.

15. Procédé selon l'une des revendications 1 à 14, notamment l'une des revendications 1 à 13 en combinaison avec la revendication 14, caractérisé en ce que pour l'obtention d'une liaison stable, on élabore à partir des couches constituant la garniture de paroi, en utilisant des liants traversant une phase thermoplastique, dans un pré-moule par exemple sensiblement plan, un élément préimprégné, en chauffant jusqu'à la phase thermoplastique,
et en ce que l'élément préimprégné est prélevé du moule et dans un second moule notamment refroidi, en chauffant le liant, est amené jusqu' à la température de réticulation, et est pourvu des éléments de bordure nécessaires et/ou est découpé.

16. Procédé selon la revendication 15, caractérise en ce que la réalisation des éléments de bordure s'effectue avant le démoulage.
